# DEMANDE DE BREVET EUROPEEN

(11) **EP 3 940 222 A1**
(43) Date de publication de la demande: **19.01.2022**
(21) Numéro de dépôt: 21186524.1
(22) Date de dépôt: 19.07.2021
(51) Int. Cl.: F02M 21/02, F02M 35/10

(54) **RAMPE D'INJECTION DE CARBURANT GAZ**

(30) Priorité: 17.07.2020 FR 2007528
(71) Demandeur: RENAULT s.a.s., 92100 Boulogne-Billancourt (FR)
(72) Inventeur: MILLON, Jean-Pierre, 78870 Bailly (FR); POMMERY, William, 95560 MONTSOULT (FR); SERAFINSKI, Michal, 92210 Saint-CLoud (FR)

(57) **Abrégé**

Dispositif d'alimentation (10) de carburant gaz pour une injection indirecte pour un moteur thermique comprenant une rampe d'injection (16) de gaz qui porte au-moins un fourreau tubulaire métallique (17) apte à loger et alimenter en carburant un injecteur de carburant (30).

## Description

### Domaine technique de l'invention

La présente invention concerne un moteur à combustion interne.

La présente invention concerne un circuit d'alimentation de carburant et d'air d'un moteur à combustion interne de véhicule automobile.

La présente invention concerne plus particulièrement un circuit d'injection indirecte de carburant notamment GPL.

### Etat de la technique

Pour améliorer la qualité de l'air, les véhicules automobiles équipés d'un moteur thermique ou à combustion interne doivent vérifier des normes d'antipollution, notamment des normes européennes d'émission, dites normes Euro qui sont des règlements de l'Union européenne fixant les limites maximales de rejets polluants pour les véhicules roulants. Lesdites normes sont de plus en plus strictes s'appliquant aux véhicules neufs. Leur objectif est de réduire la pollution atmosphérique due au transport routier.

Les moteurs thermiques peuvent être à carburation, essence, diesel, gaz ou à bicarburation essence-gaz.

Pour les moteurs thermiques à bicarburation essence et gaz liquide qui comprend un mélange butane et propane. Il est connu d'utiliser le carburant souhaité en fonction des conditions de fonctionnement.

Le carburant essence est injecté dans le moteur selon une injection directe. Un injecteur de carburant pulvérise du carburant directement dans une chambre à combustion délimitée par un cylindre creusé dans un carter-cylindres du moteur, un piston et une paroi inférieure d'une culasse laquelle est montée sur le carter-cylindres. L'injecteur présente une extrémité d'injection débouchant dans la chambre de combustion. Ce type de moteur nécessite un injecteur de carburant de forte puissance pour faire face aux pressions élevées dans la chambre à combustion.

On connait les moteurs thermiques à injection indirecte dans lesquels un injecteur injecte du carburant dans le circuit d'admission d'air en amont selon le sens de circulation d'air de la chambre à combustion. Le carburant n'est pas injecté dans le cylindre mais en amont dans un canal d'admission ou dans le répartiteur d'admission pour que l'ensemble carburant et air d'admission se mélange de manière optimale et homogène. Cela permet d'avoir une meilleure combustion et donc moins de particules fines qui forment un des problèmes des moteurs modernes. Le carburant se vaporise sous l'effet de la chaleur et brûle de manière optimale une fois arrivé dans la chambre de combustion.

Le gaz liquide est contenu dans un réservoir et peut être amené vers le circuit d'alimentation en gaz liquide, notamment vers un détendeur disposé en sortie dudit réservoir. Il est acheminé vers l'admission du moteur et plus précisément il est injecté dans un canal d'admission creusé dans une culasse dudit moteur thermique en amont de la chambre de combustion.

Il est connu de démarrer le moteur thermique avec le carburant essence pendant quelques secondes pour chauffer les différentes parties du moteur. En effet, le moteur peut comprendre des parties du canal d'admission trop froides qui peuvent entrainer de la condensation du carburant gaz.

L'invention concerne l'alimentation et l'injection de carburant gaz GPL dans un moteur thermique à bicarburation.

Le circuit d'alimentation de carburant gaz comprend un réservoir de stockage du carburant dont l'entrée est contrôlée par un détendeur. Le carburant gaz est ensuite dirigé vers une rampe d'injection de carburant gaz connecté avec les injecteurs qui présentant chacun une extrémité d'injection débouchant dans un canal d'admission d'air creusé dans une culasse du moteur thermique.

La rampe thermique est fixée par exemple contre la paroi d'admission de la culasse.

Les injecteurs sont également fixés de la même manière à ladite paroi d'admission de la culasse, notamment dans un trou de fixation percé dans la culasse et débouchant dans un canal d'admission connecté à une chambre de combustion.

Ce type de fixation nécessite plusieurs orifices de fixation et entraine une multiplicité d'opérations de vissage.

La publication FR2663993-A1 propose une fixation d'injecteur directement dans la culasse dans laquelle la rampe d'alimentation est également creusée.

Un inconvénient est le perçage de ladite rampe d'alimentation dans la culasse et également le perçage de logement apte à accueillir l'injecteur et connecté avec la rampe d'alimentation. En effet, le perçage nécessite un surplus de matière à l'endroit du perçage et les logements des injecteurs nécessite une opération plus complexe avec par exemple un moulage.

Le but de l'invention est de remédier à ces problèmes et un des objets de l'invention est un une rampe d'injection de carburant pour une injection indirecte, notamment de gaz GPL, pour un moteur thermique.

L'invention propose une rampe d'alimentation de carburant gaz qui comprend au-moins un réceptacle apte à accueillir et à alimenter un injecteur de carburant gaz, pour former un dispositif compact et robuste d'alimentation de carburant gaz à un injecteur.

### Présentation de l'invention

La présente invention concerne plus particulièrement un dispositif d'alimentation de carburant gaz d'une injection indirecte de moteur thermique de véhicule automobile comprenant une rampe d'injection de carburant gaz, ladite rampe étant destiné à alimenter au-moins un injecteur de carburant qui comporte une extrémité aval d'injection débouchant dans un canal d'admission creusé dans la culasse, et montée à l'extérieur d'une culasse dudit moteur,

Caractérisé en ce que ladite rampe comporte au-moins un fourreau métallique apte à loger le au-moins un injecteur.

De manière avantageuse, la rampe est agencée à l'extérieur de la culasse, ce qui ne nécessite pas de surplus de matière et la rampe propose un logement pour chaque injecteur de carburant gaz pour simplifier le montage.

Selon d'autres caractéristiques de l'invention :
- le fourreau métallique comporte une chambre intérieure d'alimentation de carburant.

De manière avantageuse, le fourreau métallique comporte une chambre intérieure d'alimentation de carburant gaz GPL pour faciliter la connexion avec un injecteur.
- Le fourreau métallique comporte une bouche d'alimentation connectée avec la rampe d'alimentation et la chambre intérieure.

De manière avantageuse, le fourreau métallique comporte une bouche d'alimentation radiale connectée avec la rampe d'alimentation et la chambre intérieure pour faciliter la connexion entra la rampe d'alimentation et la chambre intérieure.
- la bouche radiale comporte un ajutage de débit de carburant gaz.

De manière avantageuse, la bouche radiale présente un ajutage de débit pour équilibrer les débits à chacun des injecteurs disposés en file droite le long de la rampe.
- le fourreau comporte une extrémité aval débouchant dans un canal d'admission.

De manière avantageuse, le fourreau comporte une extrémité aval débouchant dans un canal d'admission creusé dans la culasse pour diriger le flux de gaz à l'admission.
- le fourreau est partie de la rampe d'alimentation.

De manière avantageuse, le fourreau métallique est partie de la rampe d'alimentation par exemple par soudage, ce qui réduit les problèmes d'étanchéité entre les deux pièces et permet une rigidification de l'ensemble.
- le fourreau porte une plaque de fixation à son extrémité amont supérieure.

De manière avantageuse, le fourreau porte une plaque de fixation à son extrémité supérieure qui permet de fixer la rampe d'alimentation et le fourreau au moteur.
- la rampe est fixée sur un répartiteur d'admission monté en appui contre la paroi d'admission de la culasse.

De manière avantageuse, la rampe est fixée sur un répartiteur d'admission du moteur, notamment sur la partie supérieure dudit répartiteur, ce qui réduit les points de fixation sur la culasse et améliore sa rigidité.
- la rampe est partie du répartiteur d'admission.

De manière avantageuse, la rampe avec le au-moins un fourreau est partie du répartiteur d'admission pour faciliter la mise en place des injecteurs.

### Brève description des figures

D'autres caractéristiques et avantages de l'invention apparaîtront à la lecture de la description qui suit de modes particuliers de réalisation de l'invention donnés à titre d'exemples non limitatifs et représentés sur les dessins annexés, dans lesquels :
[Fig. 1] est une vue schématique d'un répartiteur d'admission de moteur thermique fixé contre une culasse et comportant des injecteurs de carburant gaz.
[Fig. 2] est une vue schématique de la rampe d'alimentation du carburant gaz GPL.
[Fig. 3] est une vue de coupe transversale de la rampe d'alimentation avec le logement d'injecteur.

Dans la description qui va suivre, des chiffres de référence identiques désignent des pièces identiques ou ayant des fonctions similaires.

Les termes supérieur/inferieur se réfèrent à un axe vertical orthogonal à un plan horizontal qui peut être le plan de joint entre un carter-cylindres et une culasse du moteur, avec un sens dirigé depuis ledit carter-cylindres vers la culasse.

On connait les moteurs thermiques à injection directe dans lesquels un injecteur de carburant pulvérise du carburant directement dans une chambre à combustion délimitée par un cylindre creusé dans un carter-cylindres du moteur, un piston et une paroi inférieure d'une culasse laquelle est montée sur le carter-cylindres. L'injecteur présente une extrémité d'injection débouchant dans la chambre de combustion. Ce type de moteur nécessite un injecteur de carburant de forte puissance pour faire face aux pressions élevées dans la chambre à combustion.

On connait les moteurs thermiques à injection indirecte dans lesquels un injecteur injecte du carburant dans le circuit d'admission d'air en amont selon le sens de circulation d'air de la chambre à combustion. Le carburant n'est pas injecté dans le cylindre mais en amont dans un canal d'admission ou dans le répartiteur d'admission pour que l'ensemble carburant et air d'admission se mélange de manière optimale et homogène. Cela permet d'avoir une meilleure combustion et donc moins de particules fines qui forment un des problèmes des moteurs modernes. Le carburant se vaporise sous l'effet de la chaleur et brûle de manière optimale une fois arrivé dans la chambre de combustion.

L'invention concerne un moteur thermique en injection indirecte à carburation de gaz GPL ; GPL est un acronyme pour Gaz de Pétrole Liquéfié. Le carburant gaz GPL qui comprend un mélange de butane et/ou de propane, est injecté selon une injection indirecte dans le moteur, c'est-à-dire dans le répartiteur ou dans le canal d'admission en amont de la chambre à combustion.

L'invention concerne plus particulièrement un dispositif d'injection 10 de carburant gaz GPL pour un moteur thermique de véhicule automobile.

De manière connue, un moteur thermique de véhicule automobile est alimenté en air par un circuit d'admission d'air. De l'air peut être capté depuis la face avant du véhicule et conduit via le circuit d'admission jusqu'à une face d'admission du moteur, notamment d'une culasse dudit moteur. L'air passe par exemple successivement par un filtre à air, par un étage de compression qui peut-être un compresseur d'un turbo-compresseur. Après le passage au travers du compresseur, l'air d'admission compressé est plus chaud et nécessite d'être refroidi pour assurer une meilleure efficacité du moteur. Pour cela, il passe par un échangeur de chaleur généralement de type eau/air par lequel l'air transfère une partie de sa chaleur à un liquide de refroidissement à base d'eau. En sortie de l'échangeur, l'air est dirigé dans un répartiteur d'admission qui est fixé contre une paroi d'admission de la culasse du moteur. Le répartiteur comprend un plénum ou chambre de répartition connecté à des chambres de combustion du moteur via des canaux d'admission 15 creusés dans la culasse. Le carburant essence est amené par un injecteur de carburant essence dont une extrémité débouche directement dans la chambre de combustion. L'air et le carburant sont alors mélangés dans la chambre à combustion avant la combustion.

Chacune desdites chambres de combustion est délimitée par un cylindre creusé dans un carter-cylindres, un piston qui est mobile en coulissement selon l'axe du cylindre et une face inférieure de la culasse 21.

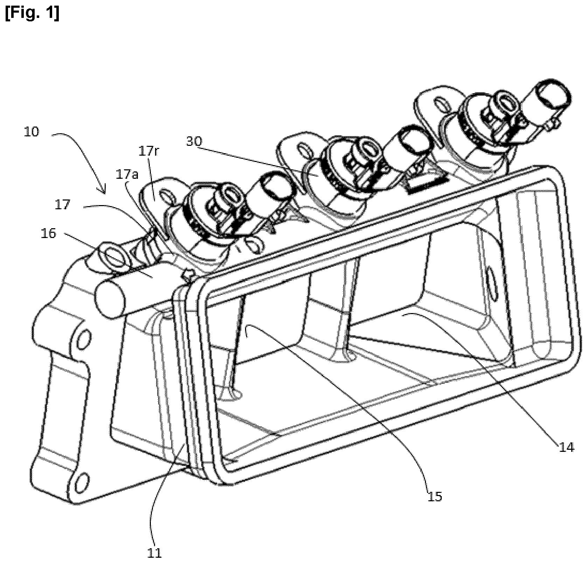

La représentation de la figure 1 montre un moteur à 3 cylindres à titre d'exemple. En effet, l'invention peut se rapporter à un moteur à 4 cylindres ou 6 cylindres.

Pour un moteur à injection indirecte ici à carburation de gaz GPL, on dispose d'un circuit d'alimentation de carburant gaz. Le carburant gaz GPL est contenu dans un réservoir connecté à un circuit d'alimentation de gaz qui comprend un détendeur, un conduit d'amenée de gaz et une rampe d'injection qui est connectée à des injecteurs. Les injecteurs de gaz sont agencés sur le circuit d'admission d'air, notamment sur le répartiteur d'admission et présentent une extrémité d'injection qui débouche dans les canaux d'admission. Les gaz GPL doivent être à l'état de vapeur pour être injectés dans les canaux d'admission.

La figure 1 montre une bride de fixation 11 d'un circuit d'admission d'air. Le circuit d'admission comprend un échangeur de chaleur ou « Water CAC » non représenté et qui est installé selon une direction oblique par rapport à la paroi d'admission 12 sensiblement verticale de la culasse du moteur afin de réduire l'encombrement global du moteur, c'est-à-dire que l'axe d'écoulement de l'air dirigé vers le moteur, au travers de l'échangeur fait un angle obtus avec un axe vertical de la paroi 12 d'admission dirigé vers le haut. L'échangeur de chaleur est donc fixé à la culasse 13 du moteur grâce à la bride de fixation 11.

L'invention n'est pas réduite à la fixation en oblique de ce mode de réalisation. En effet, l'échangeur peut être fixé de façon orthogonale contre la paroi d'admission 12 verticale de la culasse 13 du moteur.

La bride de fixation 11 délimite aussi une chambre de répartition d'air 14 ou plenum connectée à des chambres de combustion du moteur et elle forme donc également un répartiteur d'admission 11.

Par la suite, la bride de fixation ou le répartiteur d'admission 11 désignent un même objet.

Le répartiteur 11 comprend dans sa partie supérieure un logement pour chacun des injecteurs 30 de gaz GPL. Ledit logement est sensiblement cylindrique et présente un axe pointant vers le canal d'admission 15 creusé dans la culasse. Le moteur comprend au moins un logement d'injecteur de carburant GPL par cylindre.

Le circuit d'alimentation de carburant gaz comprend une rampe d'injection 16 de gaz destinée à distribuer le carburant entre les différents injecteurs 30.

La rampe d'injection des gaz 16 et les injecteurs 30 selon l'invention sont agencés en partie supérieure 11s du répartiteur 11 pour optimiser le chemin des gaz vers les chambres à combustion.

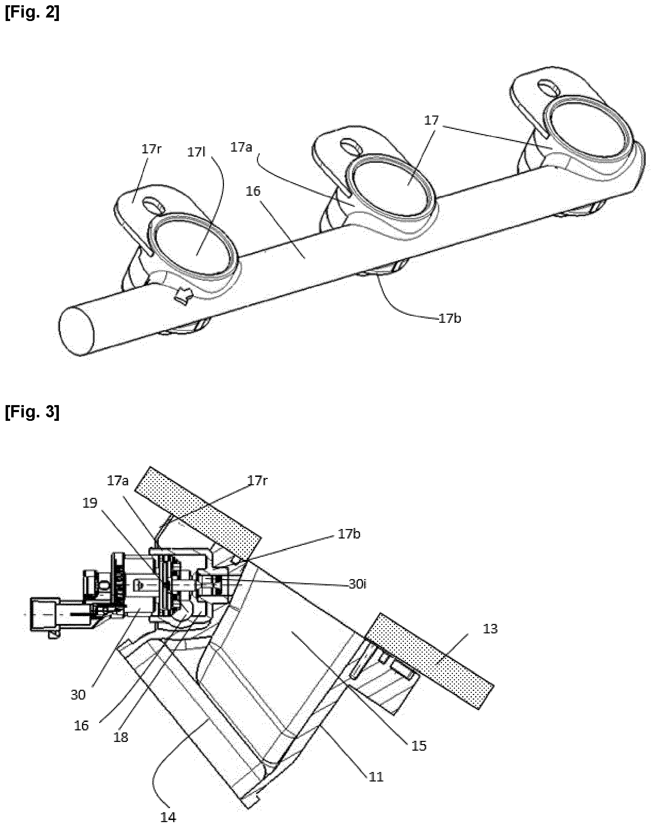

La rampe d'injection de gaz GPL 16 représentée en figure 2 s'étend transversalement à l'axe d'écoulement d'air, donc sensiblement parallèlement à la paroi d'admission 11 du moteur. Ladite rampe d'injection 16 dessert l'ensemble des injecteurs 30 de gaz, chaque injecteur est agencé au droit d'un canal d'admission 15 menant vers un cylindre.

Ladite rampe d'alimentation 16 comporte au-moins un fourreau tubulaire métallique 17 apte à loger le au-moins un injecteur 30.

En effet, les dimensions intérieures dudit fourreau tubulaire 17 sont adaptées pour loger la partie aval d'injection 30i de l'injecteur 30. Ledit fourreau comprend une première extrémité tubulaire amont 17a, une chambre intérieure 18 et une seconde extrémité tubulaire inférieure aval 17b opposée dirigée vers le canal d'admission 15. Le fourreau tubulaire 17 peut comprendre des parties dont le diamètre intérieur est sensiblement égal au diamètre extérieur de l'injecteur 30 au jeu de montage près, notamment la seconde extrémité aval 17b qui entoure l'extrémité aval d'injection 30i de l'injecteur 30 comme représenté dans la figure 3. Le fourreau tubulaire 17 permet un passage étanche de l'extrémité aval d'injection 30i de l'injecteur au travers de la bride de fixation ou répartiteur 11 et une alimentation en carburant de l'injecteur 30.

De manière préférentielle, l'extrémité aval d'injection 30i de l'injecteur 30 est montée ajustée dans la seconde extrémité aval 17b du fourreau tubulaire afin d'améliorer l'étanchéité aéraulique de l'extrémité d'injection 30i de l'injecteur.

Le fourreau métallique 17 est connecté à la rampe d'alimentation 16 de gaz GPL. Ledit fourreau est agencé transversalement à l'axe de ladite rampe 16.

Le fourreau métallique 17 comporte une bouche d'alimentation de gaz radiale 19 traversante et communiquant avec la rampe d'injection de gaz 16. Ladite bouche radiale débouche dans la chambre intérieure 18 du fourreau. Ainsi le gaz GPL s'écoule dans la rampe d'alimentation 16 puis passe au travers de ladite bouche 19 d'alimentation et remplit la chambre intérieure 18 du fourreau métallique 17.

De manière préférentielle, la bouche radiale 19 comprend un ajutage de débit de gaz pour distribuer de façon équilibrée le gaz à chacun desdits injecteurs 30.

De manière préférentielle, le fourreau métallique est partie de la rampe d'alimentation 31 de gaz.

Le fourreau métallique 17 est partie de la rampe d'alimentation 16 par exemple par soudage en une seule pièce, tel que représenté en figure 2. La rampe d'injection 16 est donc formée d'une rampe tubulaire 16t comprenant des réceptacles d'accueil et de logement 17l d'injecteurs 30, chacun desdits réceptacles étant apte à alimenter en carburant ici du gaz l'entrée de chaque injecteur 30. Le réceptacle est ici formé par le fourreau tubulaire métallique 17.

L'injecteur de gaz 30 est agencé dans le fourreau tubulaire métallique 17 et présente un orifice d'entrée de gaz débouchant dans la chambre intérieure 18 du fourreau tubulaire métallique 17. L'injecteur 30 peut comprendre un épaulement qui est monté en appui contre une paroi inférieure dudit fourreau 17 pour assurer une étanchéité aéraulique des gaz vers l'extrémité inférieure 17b du fourreau. Le fourreau métallique 17 est conformé pour entourer l'extrémité aval inférieure 30i de l'injecteur 30 traversant la paroi de la bride de fixation 11, de façon plus claire, le conduit métallique 17 forme un conduit de passage au travers de la bride de fixation pour l'injecteur de gaz 30. Ledit fourreau 17 permet également l'alimentation en gaz GPL en entrée de l'injecteur 30.

De manière préférentielle, l'extrémité supérieure 17a du fourreau 17 est prolongée radialement par une plaque de fixation 17r. Ladite plaque comporte un orifice traversant pour le passage par exemple d'un boulon. Ladite plaque 17r peut permettre la fixation de l'injecteur de gaz 30 grâce par exemple à une fourche de fixation non représentée. L'injecteur 30 ou une plaque de fixation et de maintien dudit injecteur comprend un épaulement qui est monté en appui contre le bord circulaire supérieur 17a du fourreau tubulaire pour fermer de façon étanche la chambre intérieure 18 du fourreau 17. Des joints sont disposés autour de l'injecteur pour assurer l'étanchéité des gaz entre l'injecteur 30 et le fourreau métallique 17.

De manière préférentielle, le fourreau métallique 17 et la rampe d'alimentation 16 sont partie du répartiteur d'admission 11 d'air ou de la bride de fixation comme représenté en figure 1.

Ainsi le répartiteur ou la bride de fixation 11, et la rampe d'alimentation 16 avec les fourreaux métalliques 17 sont assemblés ensemble par exemple par soudage et forment une seule pièce. Il est alors simple de fixer les injecteurs de carburant 30 gaz en les enfonçant dans les fourreaux 17.

Selon un mode de réalisation non représenté, la rampe d'alimentation ainsi que le au-moins un fourreau tubulaire sont entourés pas des moyens de chauffage, notamment des moyens de chauffage électrique pour permettre un chauffage des gaz circulant depuis la rampe jusqu'à leur injection dans le canal d'admission. Lesdits moyens de chauffage peuvent comprendre un filament de chauffage entourant ladite rampe et le au-moins un fourreau tubulaire et relié à une batterie électrique. Le filament peut être noyé dans l'épaisseur de la paroi de la rampe et de l'au-moins un fourreau tubulaire.

De manière préférentielle, le fourreau est issu de matière présentant une haute conductivité thermique pour permettre la chauffe des gaz dans l'injecteur jusqu'à leur injection. La haute conductivité thermique du conduit métallique permet une montée en température rapide et uniforme du fourreau tubulaire métallique 17. Cette montée en température entraine alors un chauffage des gaz circulant dans la rampe d'alimentation 16 jusqu'à l'entrée dans l'injecteur 30 et jusqu'à l'extrémité d'injection 30b de l'injecteur 30. La chauffe peut être démarrée au démarrage du moteur. La chauffe des gaz permet également d'éviter toute condensation des gaz GPL de la rampe d'alimentation 16 en gaz jusqu'à leur entrée dans l'injecteur 30.

Comme il va de soi, l'invention ne se limite pas aux seules formes d'exécution de cette prise, décrites ci-dessus à titre d'exemples, elle en embrasse au contraire toutes les variantes.

## Revendications

1. Dispositif d'alimentation (10) de carburant gaz d'une injection indirecte de moteur thermique de véhicule automobile comprenant une rampe d'injection (16) de carburant gaz, ladite rampe étant destiné à alimenter au-moins un injecteur (30) de carburant qui comporte une extrémité aval d'injection (30i) débouchant dans un canal d'admission (15) creusé dans une culasse dudit moteur, et montée à l'extérieur de ladite culasse,
**Caractérisé en ce que** ladite rampe (16) comporte au-moins un fourreau métallique (17) apte à loger le au-moins un injecteur (30).

2. Dispositif d'alimentation (10) selon la revendication 1, **caractérisé en ce que** le fourreau métallique (17) comporte une chambre intérieure d'alimentation (18) de carburant.

3. Dispositif d'alimentation (10) selon la revendication 2, **caractérisé en ce que** le fourreau métallique (17) comporte une bouche d'alimentation (19) connectée avec la rampe d'injection (16) et la chambre intérieure (18).

4. Dispositif d'alimentation (10) selon la revendication 3, **caractérisé en ce que** la bouche radiale (19) comporte un ajutage de débit de carburant gaz.

5. Dispositif d'alimentation (10) selon l'une quelconque des revendications 1 à 4, **caractérisé en ce que** le fourreau (17) comporte une extrémité aval (17b) débouchant dans le canal d'admission (15).

6. Dispositif d'alimentation (10) selon l'une quelconque des revendications 1 à 5, **caractérisé en ce que** le fourreau métallique (17) est partie de la rampe d'injection (16).

7. Dispositif d'alimentation (10) selon l'une quelconque des revendications 1 à 6, **caractérisé en ce que** le fourreau métallique (17) porte une plaque de fixation (17r) à son extrémité amont (17a) supérieure.

8. Dispositif d'alimentation (10) selon l'une quelconque des revendications 1 à 7, **caractérisé en ce que** la rampe d'injection (16) est fixée sur un répartiteur d'admission (11) monté en appui contre la paroi d'admission de la culasse.

9. Dispositif d'alimentation (10) selon l'une quelconque des revendications 1 à 8, **caractérisé en ce que** la rampe d'injection (16) est partie du répartiteur d'admission (11).

10. Dispositif d'alimentation (10) selon l'une quelconque des revendications 1 à 9, **caractérisé en ce que** la rampe et le au-moins un fourreau sont entourés par des moyens de chauffage électrique.
